# EUROPEAN PATENT SPECIFICATION

(11) **EP 4 530 324 B1**
(45) Date of publication and mention of the grant of the patent: **01.07.2026**
(21) Application number: 24202676.3
(22) Date of filing: 25.09.2024
(51) Int. Cl.: C09D 11/17, C09D 11/18

(54) **WATER-BASED INK COMPOSITION FOR WRITING INSTRUMENTS**
TINTENZUSAMMENSETZUNG AUF WASSERBASIS FÜR SCHREIBGERÄTE
COMPOSITION D'ENCRE AQUEUSE POUR INSTRUMENTS D'ÉCRITURE

(30) Priority: 28.09.2023 JP 2023167805
(43) Date of publication of application: 02.04.2025
(73) Proprietor: MITSUBISHI PENCIL COMPANY, LIMITED, Tokyo 140-8537 (JP)
(72) Inventor: ABE, Shinya, Fujioka-shi, Gunma, 375-8501 (JP)
(74) Representative: Vossius & Partner Patentanwälte Rechtsanwälte mbB

(56) References cited:
- JP-A- 2013 204 037
- JP-A- 2016 160 325
- JP-A- 2017 082 218

## Description

### FIELD

The present invention relates to a water-based ink composition for writing instruments.

### BACKGROUND

Ink storage tubes (refills) made of transparent or semi-transparent resin that are used in writing instruments, particularly in ballpoint pens, are expected to have a feature whereby a remaining amount of ink can be visually confirmed, and such a feature is generally referred to as "clear drain property". Clear drain property is impaired when the ink storage portion is contaminated by ink adhering thereto, and various means for rectifying this have been proposed.

PTL 1 discloses an oil-based ballpoint ink comprising at least a polypropylene glycol monoalkyl ether having a viscosity at 25°C of 600 mPa·s or more, a colorant selected from a dye, a pigment, or a mixture of a dye and a pigment, and a solvent.

PTL 2 discloses a water-based ink composition incorporated in a direct liquid writing instrument, comprising water, a colorant, and polyoxyethylene polyoxypropylene glycol and/or polyoxyethylene polyoxypropylene alkyl ether.

There has been proposed a water-based ink composition for writing instruments capable of withstanding repeated rubbing or rubbing with a stronger force against handwriting formed by writing on a writing surface, for example, a paper surface through which water-based inks do not easily penetrate, such as inkjet postcard paper or lightly coated paper.

PTL 3 discloses a water-based ink composition for writing instruments, comprising at least a colorant (A) comprising a pigment; olefin-based resin particles (B); and water, wherein the olefin-based resin particles (B) have a penetration method hardness of 1 or greater and an average particle size of 15 µm or less as measured by a Coulter counter method, and wherein a solid content mass ratio [(A)/(B)] of the colorant (A) to the olefin-based resin particles (B) is in a range of 1 to 100. Additionally, JP2017082218 might be cited as prior art.

### [CITATION LIST]

### [PATENT LITERATURE]

[PTL 1] JP 2006-348239
[PTL 2] JP 2016-27106
[PTL 3] JP 2023-24288

### SUMMARY

### [TECHNICAL PROBLEM]

When an ink blended with a glitter pigment such as an aluminum pigment or a pearl pigment is used in an ink composition for writing instruments, there is a problem that clear drain property is more easily impaired than in an ink not blended with a glitter pigment, and this problem could not be fully overcome even by the means in PTL 1 and 2. In addition, there has been a demand for inks that have good ink adhesion to paper surfaces through which water-based inks do not easily penetrate, such as inkjet postcard paper and lightly coated paper, and are not easily repelled.

The present invention provides an ink that has excellent clear drain property and, at the same time, has good ink adhesion to paper surfaces through which a water-based ink does not easily penetrate, such as inkjet postcard paper and lightly coated paper, and is not easily repelled.

### [SOLUTION TO PROBLEM]

The present inventors, as a result of intensive studies, have discovered that the above object can be achieved by the following means, and have completed the present invention. Specifically, the present invention is as follows:
<Aspect 1> A water-based ink composition for writing instruments, containing at least a glitter pigment, polyoxyalkylene glycol, and a thickener, and
   having a viscosity, measured under conditions of a temperature of 25°C and a shear rate of 3.83 sec⁻¹, of 500 to 2000 mPa·s.
<Aspect 2> The water-based ink composition for writing instruments according to Aspect 1, wherein the thickener is at least one selected from the group consisting of xanthan gum, succinoglycan, and diutan gum.
<Aspect 3> The water-based ink composition for writing instruments according to Aspect 2, wherein the thickener is a mixture of xanthan gum and at least one selected from the group consisting of succinoglycan and diutan gum, and a ratio of a mass of solid content of xanthan gum relative to a total mass of solid content of the thickener is 0.05 to 0.85.
<Aspect 4> The water-based ink composition for writing instruments according to any one of Aspects 1 to 3, wherein the glitter pigment is a silica-coated aluminum pigment.
<Aspect 5> The water-based ink composition for writing instruments according to any one of Aspects 1 to 4, further containing a phosphate ester having a HLB of 10 or less.
<Aspect 6> The water-based ink composition for writing instruments according to any one of Aspects 1 to 5, further containing a bubble suppressant.
<Aspect 7> The water-based ink composition for writing instruments according to Aspect 6, wherein the bubble suppressant is N-acetylcysteine.

### [ADVANTAGEOUS EFFECTS OF INVENTION]

According to the present invention, an ink that has excellent clear drain property and, at the same time, has good ink adhesion to lightly coated paper and is not easily repelled can be provided.

### DESCRIPTION OF EMBODIMENTS

### <<Water-based ink composition for writing instruments>>

The water-based ink composition for writing instruments of the present invention
contains at least a glitter pigment, polyoxyalkylene glycol, and a thickener, and
has a viscosity, measured under conditions of a temperature of 25°C and a shear rate of 3.83 sec⁻¹, of 500 to 2000 mPa·s.

The present inventors have discovered that an ink that has excellent clear drain property and, at the same time, has good ink adhesion to lightly coated paper (such as Christmas cards) and is not easily repelled can be provided by the above configuration.

Since glitter pigments have large particle sizes and easily adhere to inner walls of refills of writing instruments, clear drain property, particularly clear drain property when writing quickly, can be impaired. Without being bound to theory, polyoxyalkylene glycol has good adsorption properties to glitter pigments, particularly aluminum pigments, and is therefore considered capable of suppressing adhesion of glitter pigments to inner walls of refills of writing instruments. In addition, the presence of polyoxyalkylene glycol can improve ink adhesion on paper surfaces when writing on lightly coated paper such as Christmas cards.

The water-based ink composition for writing instruments of the present invention, due to the presence of a thickener, has a viscosity of 500 mPa·s or more, 600 mPa·s or more, 700 mPa·s or more, 800 mPa·s or more, 900 mPa·s or more, or 1000 mPa·s or more, and can thereby suppress sedimentation of the glitter pigment. In addition, by having the above viscosity at 2000 mPa·s or less or 1900 mPa·s or less, satisfactory writability can be maintained. The viscosity is a viscosity measured under conditions of a temperature of 25°C and a shear rate of 3.83 sec⁻¹.

In the present invention, "water-based ink composition" means an ink composition comprising a water-based medium as a liquid component.

In the water-based ink composition for writing instruments of the present invention, it is preferable that a bubble suppressant be contained from the viewpoint of facilitating movement of air bubbles in the ink and thereby further improving clear drain property.

The water-based ink composition for writing instruments of the present invention may contain a coloring material.

The water-based ink composition for writing instruments of the present invention may contain optionally additional components.

Hereinafter, each component of the present invention will be described.

### <Water-based medium>

The water-based medium contains water and an optional water-soluble organic solvent. In the water-based medium, the content ratio of water among the liquid components is the highest. Particularly, the content ratio of water, relative to the mass of the water-based medium, may be greater than 50% by mass, 60% by mass or greater, 70% by mass or greater, 75% by mass or greater, or 78% by mass or greater, and may be 100% by mass or less, 95% by mass or less, or 90% by mass or less.

### (Water)

As water, for example, tap water, purified water, distilled water, ion-exchanged water, and pure water can be used.

### (Water-soluble organic solvent)

As water-soluble organic solvents, for example, aromatics, alcohols, polyhydric alcohols, glycol ethers, or esters can be used. These solvents may be used independently, or may be used in combination.

As aromatics, for example, benzyl alcohol, ethylene glycol monophenyl ether, ethylene glycol monobenzyl ether, propylene glycol monophenyl ether, diethylene glycol monophenyl ether, and alkylsulfonic phenyl ester can be used.

As alcohols, for example, ethanol, n-propanol, isopropanol, n-butanol, isobutanol, tert-butyl alcohol, 1-pentanol, isoamyl alcohol, sec-amyl alcohol, 3-pentanol, tert-amyl alcohol, n-hexanol, methyl amyl alcohol, 2-ethyl butanol, n-heptanol, 2-heptanol, 3-heptanol, n-octanol, 2-octanol, 2-ethylhexanol, 3,5,5-trimethylhexanol, nonanol, n-decanol, undecanol, trimethylnonyl alcohol, tetradecanol, heptadecanol, cyclohexanol, and 2-methylcyclohexanol can be used.

As polyhydric alcohols, for example, ethylene glycol, diethylene glycol, 3-methyl-1,3-butanediol, triethylene glycol, dipropylene glycol, 1,3 propanediol, 1,3 butanediol, 1,5 pentanediol, hexylene glycol, and octylene glycol can be used.

As glycol ethers, for example, methyl isopropyl ether, ethyl ether, ethyl propyl ether, ethyl butyl ether, isopropyl ether, butyl ether, hexyl ether, 2-ethylhexyl ether, ethylene glycol monohexyl ether, ethylene glycol mono-2-ethylbutyl ether, ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, triethylene glycol monobutyl ether, tetraethylene glycol monobutyl ether, 3-methyl-3-methoxy-1-butanol, 3-methoxy-1-butanol, propylene glycol monomethyl ether, propylene glycol monoethyl ether, propylene glycol monopropyl ether, propylene glycol monobutyl ether, propylene glycol tertiary butyl ether, dipropylene glycol monomethyl ether, dipropylene glycol monoethyl ether, dipropylene glycol monopropyl ether, dipropylene glycol monobutyl ether, tripropylene glycol monomethyl ether, tripropylene glycol monobutyl ether, and tetrapropylene glycol monobutyl ether can be used.

As esters, for example, propylene glycol methyl ether acetate, propylene glycol diacetate, 3-methyl-3-methoxybutyl acetate, propylene glycol ethyl ether acetate, ethylene glycol ethyl ether acetate, butyl formate, isobutyl formate, isoamyl formate, propyl acetate, butyl acetate, isopropyl acetate, isobutyl acetate, isoamyl acetate, methyl propionate, ethyl propionate, propyl propionate, isobutyl propionate, isoamyl propionate, methyl butyrate, ethyl butyrate, propyl butyrate, methyl isobutyrate, ethyl isobutyrate, propyl isobutyrate, methyl valerate, ethyl valerate, propyl valerate, methyl isovalerate, ethyl isovalerate, propyl isovalerate, methyl trimethylacetate, ethyl trimethylacetate, propyl trimethylacetate, methyl caproate, ethyl caproate, propyl caproate, methyl caprylate, ethyl caprylate, propyl caprylate, methyl laurate, ethyl laurate, methyl oleate, ethyl oleate, caprylic triglyceride, tributyl acetate citrate, octyl oxystearate, propylene glycol monoricinoleate, methyl 2-hydroxyisobutyrate, and 3-methoxybutyl acetate can be used.

The content ratio of the water-based organic solvent, based on the entire mass of the water-based ink composition for writing instruments, may be 3% by mass or greater, 5% by mass or greater, 7% by mass or greater, 10% by mass or greater, or 12% by mass or greater, and may be 30% by mass or less, 25% by mass or less, 20% by mass or less, or 17% by mass or less.

### <Glitter pigment>

As glitter pigments, for example, metal powder pigments, metal oxide powder pigments, pearl pigments, aluminum pigments, and flaky pigments can be used. The flaky pigment may be a flaky pigment having a base material of lump flakes coated thereon with a metal or a metal oxide, and for example, may be a flaky glass pigment or a flaky plastic pigment. These glitter pigments can be used independently or in combination. Among the pigments, it is particularly preferable that an aluminum pigment be used from the viewpoint of writability.

Aluminum pigments are largely classified into leafing type and non-leafing type by the type of pulverizing aid. In commercial products, examples of the non-leafing type include Alpaste 1100MA, CS420, and CS460; WXM series in which aluminum surfaces are treated for rust prevention with phosphorus-based compound; WL series in which aluminum surfaces are treated for rust prevention with a molybdenum compound; EMR series in which surfaces of aluminum flakes are coated with high-density silica (the above manufactured by Toyo Aluminum K.K.); and SW-120PM (the above manufactured by Asahi Kasei Chemicals).

Aluminum pigments are preferable from the viewpoint of writability. However, air bubbles are easily generated, thereby impairing clear drain property. By using a silica-coated aluminum pigment, which is coated with silica, as an aluminum pigment, the generation of air bubbles can be suppressed.

The content ratio of the glitter pigment, based on the entire mass of the water-based ink composition for writing instruments, may be 1% by mass or greater, 3% by mass or greater, or 5% by mass or greater, and may be 30% by mass or less, 25% by mass or less, 20% by mass or less, 15% by mass or less, 12% by mass or less, 10% by mass or less, or 8% by mass or less.

<Polyoxyalkylene glycol>

Polyoxyalkylene glycol is generally a compound having repeating units based on an alkylene oxide monomer. The alkylene oxide monomer, for example, may be ethylene oxide or propylene oxide. These may be used independently, or used in combination.

As such a polyoxyalkylene glycol, for example, polyoxyethylene polyoxypropylene glycol can be used. Commercially available polyoxyethylene polyoxypropylene glycols, for example, Unilube 50MB-2, 50MB-5, 50MB-11, 50MB-26, 50MB-72, 50MB-168, 75DE-25, 75DE-60, 75DE-170 (the above, NOF Corporation) can be used.

Polyoxyethylene polyoxypropylene glycol is a compound having H as R in general formula (1).

R-O-(C₃H₆O)ₘ(C₂H₄O)ₙ-H (1)

where R in the formula represents an alkyl group, and m and n each independently represent a number of 1 to 40.

The alkyl group represented by R in the general formula, for example, may be an alkyl group in which the number of carbon atoms is 2 or greater or 3 or greater and 8 or less, 7 or less, 6 or less, 5 or less, or 4 or less. Further, the number of moles added of ethylene oxide and propylene oxide represented by m and n each independently may be 1 or greater, 3 or greater, 5 or greater, 7 or greater, 10 or greater, or 12 or greater, and may be 40 or less, 35 or less, 30 or less, 27 or less, 25 or less, 24 or less, 22 or less, 20 or less, or 18 or less.

Particularly, it is preferable that the molecular weight of polyoxyethylene polyoxypropylene glycol be 800 to 3500 from the viewpoint of suppressing an increase in ink viscosity due to the addition thereof.

The content ratio of the polyoxyalkylene glycol, relative to the mass of the water-based ink composition for writing instruments, may be 0.01% by mass or greater, 0.03% by mass or greater, 0.05% by mass or greater, 0.07% by mass or greater, 0.1% by mass or greater, or 0.2% by mass or greater, and may be 5.0% by mass or less, 4.5% by mass or less, 4.0% by mass or less, 3.0% by mass or less, 3.5% by mass or less, 2.0% by mass or less, 2.5% by mass or less, 1.0% by mass or less, 0.7% by mass or less, 0.6% by mass or less, or 0.5% by mass or less.

### <Thickener>

As thickeners that can be used, for example, at least one selected from the group consisting of synthetic polymers, celluloses, and polysaccharides is desirable. Specific examples include gum arabic, tragacanth gum, guar gum, locust bean gum, alginic acid, carrageenan, gelatin, xanthan gum, welan gum, succinoglycan, diutan gum, dextran, methyl cellulose, ethyl cellulose, hydroxyethyl cellulose, carboxymethyl cellulose, fermented cellulose, oxidized cellulose, crystalline cellulose, starch glycolate and salts thereof, polyvinylpyrrolidone, polyvinyl methyl ether, polyacrylic acid and salts thereof, polyethylene oxide, copolymers of vinyl acetate and polyvinylpyrrolidone, styrene-acrylate copolymers and salts thereof, alkali-swelling associative emulsions, and alkali-swelling emulsions.

Particularly, the thickener is at least one selected from the group consisting of xanthan gum, succinoglycan, and diutan gum, and especially a mixture of xanthan gum and at least one selected from the group consisting of succinoglycan and diutan gum, from the viewpoint of suppressing sedimentation and the resulting color separation.

When the thickener is a mixture of xanthan gum and at least one selected from the group consisting of succinoglycan and diutan gum, it is preferable that the ratio of the mass of solid content of xanthan gum relative to the total mass of solid content of the thickener be 0.05 or greater, 0.10 or greater, 0.15 or greater, 0.20 or greater, 0.25 or greater, 0.30 or greater, 0.35 or greater, 0.40 or greater, or 0.45 or greater from the viewpoint of improving writability. It is preferable that this ratio be 0.85 or less, 0.80 or less, 0.75 or less, 0.70 or less, 0.65 or less, 0.60 or less, or 0.55 or less from the viewpoint of suppressing sedimentation of the glitter pigment.

### <Phosphate ester>

The phosphate ester used in the present invention is not particularly limited, and for example, a phosphate ester of polyoxyethylene alkyl ether or polyoxyethylene alkylaryl ether can be used. These phosphate esters may be used independently or in a mixture of two or more.

It is preferable that phosphate esters having a HLB of 10 or less (HLB ≤ 10) be used from the viewpoint of clear drain property. HLB may be 4 or greater, 5 or greater, 6 or greater, 7 or greater, or 8 or greater.

Phosphate esters that can be used specifically include Phosphanol RB-410 and RD-510Y (manufactured by Toho Chemical Industry Co., Ltd.).

These can be used as they are or as salts neutralized with an alkali metal or an organic base, and may be used in combination of two or more.

The content ratio of the phosphate ester, relative to the mass of the water-based ink composition for writing instruments, may be 0.01% by mass or greater, 0.03% by mass or greater, 0.05% by mass or greater, 0.07% by mass or greater, 0.1% by mass or greater, 0.2% by mass or greater, or 0.3% by mass or greater, and may be 5.0% by mass or less, 4.5% by mass or less, 4.0% by mass or less, 3.5% by mass or less, 3.0% by mass or less, 2.0% by mass or less, 2.5% by mass or less, 1.0% by mass or less, 0.7% by mass or less, 0.6% by mass or less, or 0.5% by mass or less.

### <Bubble suppressant>

As bubble suppressants, for example, at least one of cysteine and derivatives thereof, glutathione and derivatives thereof, hydroxylamine and derivatives thereof, ascorbic acid and derivatives thereof, erythorbic acid and derivatives thereof, and salts thereof, and oligomers of N-vinyl-2-pyrrolidone can be used.

Particularly, when an aluminum pigment is used as the glitter pigment, air bubbles may be generated in a refill during storage over time, which may cause problems of obstructing the ink flow path and hindering outflow property. In this case, by further including a bubble suppressant, ink flowability can be improved.

Among bubble suppressants, it is preferable that derivatives of cysteine, particularly N-acetylcysteine, be used from the viewpoint of suppressing air bubble generation. Specifically, when an aluminum pigment, particularly a silica-coated aluminum pigment, is used as the glitter pigment, generation of air bubbles due to the glitter pigment easily occurs, and thus the presence of N-acetylcysteine is useful.

It is preferable that the content ratio of the bubble suppressant, relative to the mass of the water-based ink composition for writing instruments, be 0.01% by mass or greater, 0.03% by mass or greater, 0.05% by mass or greater, 0.07% by mass or greater, 0.1% by mass or greater, or 0.2% by mass or greater from the viewpoint of adjusting dissolved oxygen concentration in the ink composition and thereby suppressing air bubbles. This content ratio may be 5.0% by mass or less, 4.5% by mass or less, 4.0% by mass or less, 3.5% by mass or less, 3.0% by mass or less, 2.5% by mass or less, 2.0% by mass or less, 1.0% by mass or less, or 0.5% by mass or less.

### <Coloring material>

As coloring materials, various coloring materials that can be used in conventional inks, such as dyes, pigments, and mixtures of dyes and pigments, can be used. These colorants may be used independently, or may be mixed and used.

As dyes, all dyes that dissolve or disperse in water can be used, and examples include acidic dyes such as eosin, phloxine, Water Yellow #6-C, Acid Red, Water Blue #105, Brilliant Blue FCF, and Nigrosine NB; direct dyes such as Direct Black 154, Direct Sky Blue 5B, and Violet BB; and basic dyes such as rhodamine and methyl violet.

As pigments, conventionally known inorganic pigments such as titanium oxide and organic pigments, resin particle pigments containing dyes or pigments, pseudo-pigments in which resin emulsions are colored with dyes or pigments, white plastic pigments, thermochromic pigments, and photochromic particles can be used without limitations.

As inorganic pigments, for example, carbon black, titanium black, zinc oxide, red iron oxide, aluminum, chromium oxide, iron black, cobalt blue, iron oxide yellow, viridian, zinc sulfide, lithopone, cadmium yellow, vermillion, cadmium red, chrome yellow, molybdate orange, zinc chromate, strontium chromate, white carbon, clay, talc, ultramarine, precipitated barium sulfate, baryte powder, calcium carbonate, white lead, bluish white, iron blue, manganese violet, aluminum powder, and brass powder can be used.

Organic pigments include azo-lakes, insoluble azo pigments, chelate azo pigments, phthalocyanine pigments, perylene and perinone pigments, and nitroso pigments. Examples of such organic pigments include C.I. Pigment Blue 15, C.I. Pigment Blue 17, C.I. Pigment Blue 27, C.I. Pigment Red 5, C.I. Pigment Red 22, C.I. Pigment Red 38, C.I. Pigment Red 48, C.I. Pigment Red 49, C.I. Pigment Red 53, C.I. Pigment Red 57, C.I. Pigment Red 81, C.I. Pigment Red 104, C.I. Pigment Red 146, C.I. Pigment Red 245, C.I. Pigment Yellow 1, C.I. Pigment Yellow 3, C.I. Pigment Yellow 12, C.I. Pigment Yellow 13, C.I. Pigment Yellow 14, C.I. Pigment Yellow 17, C.I. Pigment Yellow 34, C.I. Pigment Yellow 55, C.I. Pigment Yellow 74, C.I. Pigment Yellow 95, C.I. Pigment Yellow 166, C.I. Pigment Yellow 167, C.I. Pigment Orange 5, C.I. Pigment Orange 13, C.I. Pigment Orange 16, C.I. Pigment Violet 1, C.I. Pigment Violet 3, C.I. Pigment Violet 19, C.I. Pigment Violet 23, C.I. Pigment Violet 50, and C.I. Pigment Green 7.

Thermochromic pigments can include thermochromic pigments manufactured by microencapsulating a thermochromic composition comprising at least a leuco dye that functions as a color former, a developer as a component capable of causing the leuco dye to form color, and a color change temperature regulator that can control the color change temperature in the coloration by the leuco dye and the developer, so as to have a predetermined average particle size (for example, 0.1 to 6 µm). The average particle size, for example, may be 0.1 µm or more, 0.2 µm or more, 0.3 µm or more, 0.5 µm or more, 0.7 µm or more, or 0.9 µm or more, and may be 6 µm or less, 5 µm or less, 4 µm or less, 3 µm or less, 2 µm or less, or 1 µm or less.

As photochromic particles, for example, photochromic particles composed of at least one selected from photochromic substances, such as photochromic dyes (compounds) and fluorescent dyes, and a resin, such as a terpene phenol resin, can be used. In addition, photochromic particles can include photochromic particles manufactured by microencapsulating a photochromic composition comprising at least one selected from photochromic substances such as photochromic dyes (compounds) and fluorescent dyes, an organic solvent, and additives such as antioxidants, photostabilizers, and sensitizers, so as to have a predetermined average particles size (for example, 0.1 to 6 µm).

The photochromic particles, by suitably using the above photochromic substance, for example, can have the properties of being colorless in an indoor lighting environment (indoor lighting selected from incandescent lamp, fluorescent lamp, lamp, and white LED) and forming color in an ultraviolet-irradiated environment (environment irradiated with radiation at wavelengths of 200 to 400 nm or sunlight including ultraviolet rays).

In the present invention (including the Examples), "average particle size" is appropriately selected depending on size of the particles to be measured, is the value of histogram average particle size (D50) calculated on a volume basis in a scattering intensity distribution measured by a dynamic light scattering method in the case of particles of generally less than 1 µm, and is the value of median diameter (D50) calculated on a volume basis in a laser diffraction method in the case of particles of 1 µm or more. The measurement of average particle size can be carried out using a particle size analyzer (Microtrac HRA 9320-X100 (Nikkiso Co., Ltd.)).

Methods of microencapsulating the above thermochromic pigments and the above photochromic particles can include, for example, an interfacial polymerization method, an interfacial polycondensation method, an *in situ* polymerization method, a liquid-curing coating method, a method of phase separation from an aqueous solution, a method of phase separation from an organic solvent, a melting dispersion cooling method, an air-suspension coating method, and a spray drying method, and can be appropriately selected according to application.

For example, in a method of phase separation from an aqueous solution, a thermochromic microcapsule pigment can be manufactured by a method comprising carrying out the following steps, particularly the following steps in this order:
(1) heat-melting the leuco dye, the developer, and the color change temperature regulator;
(2) adding the heat-melted leuco dye, developer, and color change temperature regulator to an emulsifier solution, and heating and stirring to disperse the mixture in the form of oil droplets to prepare a dispersion liquid;
(3) adding gradually, as a capsule membrane agent, a resin raw material capable of forming a wall membrane, such as a urethane resin, an epoxy resin, or an amino resin, for example, an amino resin solution, specifically, an amino resin solution such as a methylolmelamine aqueous solution, a urea solution, or a benzoguanamine solution, to the above dispersion liquid and reacting the resin raw material to form a capsule membrane, thereby obtaining a thermochromic microcapsule pigment; and
(4) filtering the dispersion liquid comprising the thermochromic microcapsule pigment.

In the thermochromic pigment, by suitably combining the types and amounts of the leuco dye, the developer, and the color change temperature regulator, the color-forming temperature and color-erasing temperature of each color can be set to suitable temperatures.

These coloring materials can be used independently or used in a mixture of two or more. Among these coloring materials, the average particle sizes of pigments dispersed in water, resin particle pigments, pseudo-pigments, white plastic pigments, multilayer-coated pigments, thermochromic pigments, and photochromic pigments vary according to ball diameter and ink composition and viscosity. However, it is desirable that the average particle size be 0.02 to 6 µm. The average particle size, for example, may be 0.02 µm or more, 0.05 µm or more, 0.07 µm or more, 0.10 µm or more, 0.20 µm or more, 0.30 µm or more, 0.50 µm or more, 0.70 µm or more, or 0.90 µm or more, and may be 6 µm or less, 5 µm or less, 4 µm or less, 3 µm or less, 2 µm or less, or 1 µm or less.

The content of these coloring materials can be appropriately increased or decreased depending on drawn line density of the ink, but may be 0.1% by mass or greater, 0.3% by mass or greater, 0.5% by mass or greater, 0.7% by mass or greater, 0.9% by mass or greater, or 1.0% by mass or greater, and is preferably 40% by mass or less, 35% by mass or less, 30% by mass or less, 25% by mass or less, 20% by mass or less, 15% by mass or less, or 10% by mass or less, relative to the ink composition total amount.

### <Additional components>

The water-based ink composition for writing instruments of the present invention may contain optionally additional components. Examples of additional components include humectants, dispersants, lubricants, pH modifiers, rust inhibitors, preservatives, antibacterial agents, and adhesive resins.

As dispersants, water-soluble resins are used. As dispersants, water-soluble polymers are preferably used.

As lubricants, lubricants used as surface treatment agents for pigments can be used, and for example, nonionic surfactants such as fatty acid esters of polyhydric alcohols, higher fatty acid esters of saccharides, polyoxyalkylene higher fatty acid esters, and alkyl phosphate esters; anionic surfactants such as phosphate esters, alkyl sulfonates of higher fatty acid amides, and alkyl aryl sulfonates; derivatives of polyalkylene glycols, and polyether-modified silicones can be used.

Examples of pH modifiers include ammonia, urea, amines such as monoethanolamine, diethanolamine, and triethanolamine; alkali metal salts of carbonates and phosphates such as sodium tripolyphosphate and sodium carbonate; and hydrates of alkali metal salts such as sodium hydroxide.

As rust inhibitors, benzotriazole, tolyltriazole, dicyclohexylammonium nitrite, and saponins can be used. As preservatives or antibacterial agents, phenols, sodium omadine, sodium benzoate, thiazoline-based compounds, and benzimidazole-based compounds can be used.

Adhesive resins are resins used for viscosity adjustment and adhesive strength improvement, as needed. As adhesive resins, for example, water-soluble resins and resin emulsions can be used.

As water-soluble resins, for example, water-soluble resin with a hydrophobic moiety in the molecule, such as polyacrylic acid, water-soluble styrene-acrylic resins, water-soluble styrenemaleic acid resins, polyvinyl alcohol, polyvinylpyrrolidone, water-soluble maleic acid resins, water-soluble styrene resins, water-soluble ester-acrylic resins, ethylene-maleic acid copolymers, polyethylene oxide, and water-soluble urethane resins can be used.

As resin emulsions, for example, at least one selected from polyolefin-based emulsions, acrylic emulsions, vinyl acetate-based emulsions, urethane-based emulsions, styrene-butadiene emulsions, and styrene acrylonitrile emulsions can be used.

The adhesive resins may be used independently, or may be mixed and used. Particularly, it is preferable that one or more of each of the above water-soluble resins and resin emulsions, i.e., a total of two or more adhesive resins, be used from the viewpoint of adhesion.

The above additional components may be of one type used alone, or may be of two or more types used in combination. Commercial products, if available, may be used.

### <<Ballpoint pen>>

The ballpoint pen of the present invention is a ballpoint pen comprising at least an ink reservoir, a writing part comprising a ball, and a retention part, wherein
the above water-based ink composition for writing instruments is stored in the ink reservoir.

The ink reservoir and the writing part may be integrated. Specifically, the ballpoint pen of the present invention may comprise a refill comprising an ink reservoir and a writing part.

### <Ink reservoir>

In the ink reservoir, the above water-based ink composition for writing instruments is stored.

For the ink reservoir, any object can be used as long as the object is capable of storing ink and supplying ink to the writing part, but when a hollow ink reservoir made of transparent or semi-transparent resin is used, the satisfactory clear drain property of the water-based ink composition for writing instruments of the present invention is particularly useful.

### <Writing part>

The writing part can consist of a writing part comprising a ballpoint pen tip in the nib portion.

The ballpoint pen tip may be composed of a ball and a holder rotatably holding the ball. The ball may be composed of any material used in balls of ballpoint pens, and for example, may be composed of stainless steel, cemented carbide, or a ceramic. The shape of the ballpoint pen tip is not particularly limited, and for example, may be bullet-shaped or needle-shaped.

It is preferable that the surface roughness Ra of the ball be less than 10 nm, 8 nm or less, 6 nm or less, 5 nm or less, 4 nm or less, or 3 nm or less from the viewpoint of writing feel. The surface roughness may be 1.0 nm or more, 1.5 nm or more, or 1.7 nm or more.

"Surface roughness Ra" in the present invention (including the Examples described below) is measured by a non-contact surface profiler (NewView 7200, Zygo Corporation), set under conditions of lens magnification of 50×, evaluation length of 100 µm, and Gaussian filter of 25 µm, and in accordance with JIS B0601 (Geometrical Product Specification-Surface Texture).

It is preferable that clearance of the ball, i.e., movable distance of the ball along the vertical axis of the ballpoint pen tip body, be 30 µm or more, 40 µm or more, 50 µm or more, or 60 µm or more and 120 µm or less, 110 µm or less, 100 µm or less, or 90 µm or less from the viewpoint of writability. The measurement of this clearance can be carried out with a measuring microscope by measuring the distance between the state where the ball is in contact with the seat of the ballpoint pen tip and the state where the ball is in contact with the crimped portion at the nib of the ballpoint pen tip.

### EXAMPLES

The present invention will be specifically described by the Examples and Comparative Examples. However, the present invention is not limited thereto.

### <<Production of water-based ink composition>>

### <Examples 1 to 7 and Comparative Examples 1 to 6>

The substances indicated in Table 1 were mixed in parts by mass indicated in Table 1 to obtain 100 parts by mass of water-based ink compositions for writing instruments.

The details of the substances indicated in Table 1 are as follows.
Silica A: silica-coated aluminum pigment (Emeral EMR-D5660, Toyo Aluminum K.K.)
Silica B: silica-coated aluminum pigment (Emeral EMR-D7670, Toyo Aluminum K.K.)
Pearl: pearl pigment (Iriodin 111, Merck)
POG-A: polyoxyethylene polyoxypropylene glycol (EMULGEN PP-290, Kao Corporation)
POG-B: Pluronic^{®} nonionic surfactant in which ethylene oxide was added to polypropylene glycol (NEWPOL PE-108, Sanyo Chemical Industries, Ltd.)
AG: acetylene glycol-based surfactant (SURFYNOL 104H, Nissin Chemical Co., Ltd.)
Fluorine: fluorine-based surfactant (SURFLON S-211, AGC Inc.)
Silicone: silicone-based surfactant (BYK-349, BYK)
Xanthan gum: KELZAN AR (Sansho Co., Ltd.)
Succinoglycan: Rheozan SH (Solvay S.A.)
Diutan gum: KELCO-VIS DF-F (Sansho Co., Ltd.)
Inorganic salt acrylate: HIVISWAKO 105 (Fujifilm Wako Pure Chemical Industries, Ltd.)
Phosphate ester A: Phosphanol RB-410 (Toho Chemical Industry Co., Ltd.)
Phosphate ester B: Phosphanol RD-510Y (Toho Chemical Industry Co., Ltd.)
Phosphate ester C: Phosphanol RS-610 (Toho Chemical Industry Co., Ltd.)
Bubble suppressant: N-acetyl-L-cysteine (Fujifilm Wako Pure Chemical Industries, Ltd.)
Yellow pigment: Pigment Yellow (Sanyo Color Works, Ltd.)
Styrene-acrylic resin: JONCRYL PDX-7615 (BASF SE)

Viscosities of the obtained water-based ink compositions for writing instruments were measured under conditions of a temperature of 25°C and a shear rate of 3.83 sec⁻¹.

The resulting water-based ink composition for writing instruments was filled into a ballpoint pen to obtain a water-based ballpoint pen. Examples 1 and 3 to 7 and Comparative Examples 1 to 6 used transparent refills comprising a ballpoint pen tip with a clearance of 60 ± 20 µm. Example 2 used a transparent refill comprising a ballpoint pen tip with a clearance of 90 ± 20 µm. The surface roughness of the balls used were all within the range of about 1.7 to 2.0 nm.

### <<Evaluation>>

### <Clear drain property>

The produced water-based ballpoint pen was used for writing to the final pen stroke, the refill was inspected from the outside, and the condition of the refill was visually confirmed, whereby clear drain property was evaluated. Evaluation criteria were as follows.
A: Ink adhesion was not observed on inner wall of refill.
B: Ink adhesion was observed on inner wall of refill, but visual confirmation of refill interior was not an issue.
C: Ink adhered to inner wall of refill to the extent that visual confirmation of refill interior was difficult.

### <Repellency to lightly coated paper>

The produced water-based ballpoint pen was used to write on lightly coated paper, and appearance of the drawn lines was visually confirmed. Evaluation criteria were as follows.
A: Clear drawn lines without breaks were obtained.
B: Drawn lines, although somewhat broken, could be recognized.
C: Breaks occurred in all drawn lines.

### <Sedimentation and color separation>

The produced water-based ballpoint pen was left to stand in an environment of a temperature of 50°C and a relative humidity of 30% for 3 months in a state where the pen tip faces downward, and the appearance of the refill after leaving to stand was visually confirmed. Evaluation criteria were as follows. Sedimentation and color separation were evaluated by comparing with the appearance of the water-based ballpoint pen immediately after assembly.
A: Appearance did not change.
B: Some shading or color separation was found in refill.
C: Sedimentation of glitter pigment and obvious color separation were found.

### <Writability>

A mechanical writing test of spiral writing to the final pen stroke was carried out under conditions of a load of 100 gf, a writing angle of 65 degrees, and a writing speed of 4.5 mm/min.

Evaluation criteria were as follows:
A: Writing was possible with each of 5 pens without blurring to final pen stroke.
B: Some blurring could be found, but writing was possible with each of 5 pens to final pen stroke.
C: Blurring and breaks were found throughout all drawn lines.

The configurations and evaluation results of the Examples and Comparative Examples are shown in Tables 1 and 2.

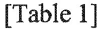

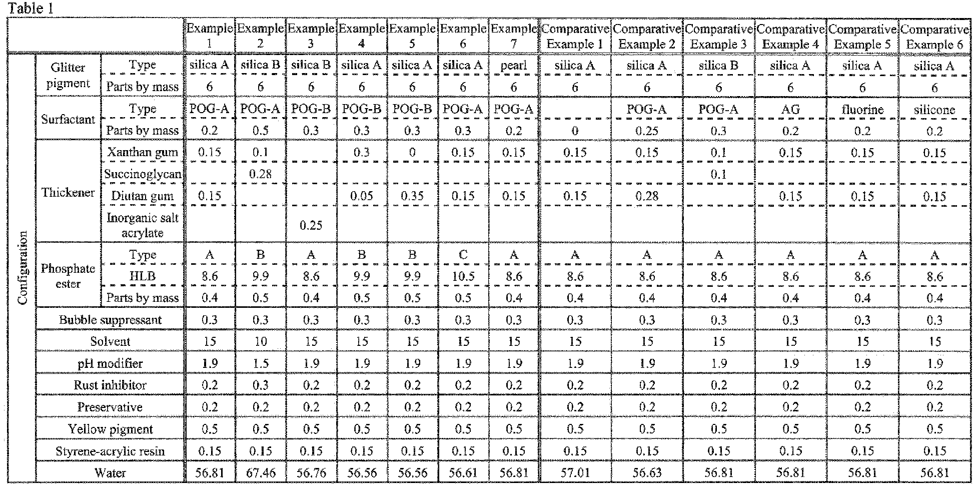

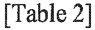

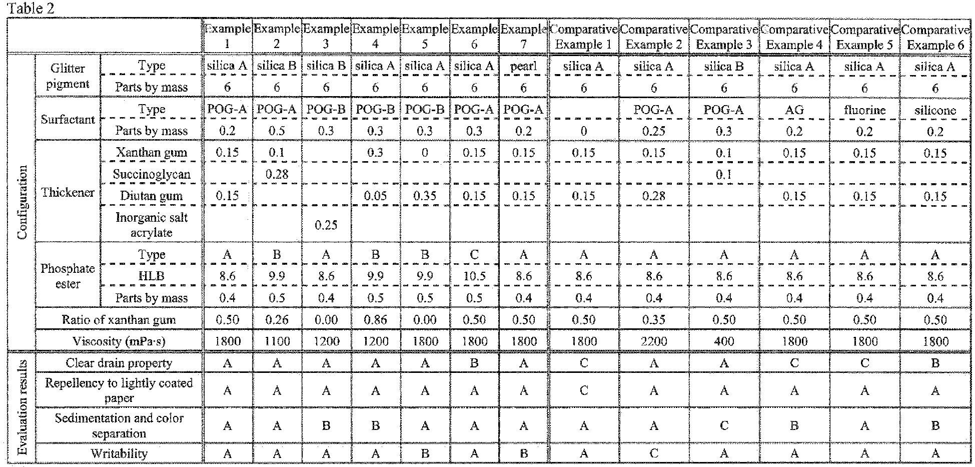

From Tables 1 and 2, it can be understood that the water-based ink compositions for writing instruments of the Examples, which contain at least a glitter pigment, polyoxyalkylene glycol (POG), and a thickener and has a viscosity, measured under conditions of a temperature of 25°C and a shear rate of 3.83 sec⁻¹, of 500 to 2000 mPa·s, were all satisfactory in terms of clear drain property, repellency to lightly coated paper, sedimentation and color separation, and writability.

## Claims

1. A water-based ink composition for writing instruments, containing at least a glitter pigment, polyoxyalkylene glycol, and a thickener, and
having a viscosity, measured under conditions of a temperature of 25°C and a shear rate of 3.83 sec⁻¹, of 500 to 2000 mPa·s.

2. The water-based ink composition for writing instruments according to Claim 1, wherein the thickener is at least one selected from the group consisting of xanthan gum, succinoglycan, and diutan gum.

3. The water-based ink composition for writing instruments according to Claim 2, wherein the thickener is a mixture of xanthan gum and at least one selected from the group consisting of succinoglycan and diutan gum, and a ratio of a mass of solid content of xanthan gum relative to a total mass of solid content of the thickener is 0.05 to 0.85.

4. The water-based ink composition for writing instruments according to any one of Claims 1 to 3, wherein the glitter pigment is a silica-coated aluminum pigment.

5. The water-based ink composition for writing instruments according to any one of Claims 1 to 4, further containing a phosphate ester having a HLB of 10 or less.

6. The water-based ink composition for writing instruments according to any one of Claims 1 to 5, further containing a bubble suppressant.

7. The water-based ink composition for writing instruments according to Claim 6, wherein the bubble suppressant is N-acetylcysteine.

## Patentansprüche

1. Eine Tintenzusammensetzung auf Wasserbasis für Schreibgeräte, welche mindestens ein Glitzerpigment, Polyoxyalkylenglykol und ein Verdickungsmittel enthält und
welche eine Viskosität, gemessen unter Bedingungen einer Temperatur von 25 °C und einer Schergeschwindigkeit von 3,83 s⁻¹, von 500 bis 2000 mPa·s aufweist.

2. Die Tintenzusammensetzung auf Wasserbasis für Schreibgeräte gemäß Anspruch 1, wobei das Verdickungsmittel mindestens eines ist, ausgewählt aus der Gruppe bestehend aus Xanthangummi, Succinoglykan und Diutangummi.

3. Die Tintenzusammensetzung auf Wasserbasis für Schreibgeräte gemäß Anspruch 2, wobei das Verdickungsmittel ein Gemisch aus Xanthangummi und mindestens einem, ausgewählt aus der Gruppe bestehend aus Succinoglykan und Diutangummi, ist und ein Verhältnis einer Masse des Feststoffgehalts an Xanthangummi zur Gesamtmasse des Feststoffgehalts des Verdickungsmittels 0,05 bis 0,85 beträgt.

4. Die Tintenzusammensetzung auf Wasserbasis für Schreibgeräte gemäß einem der Ansprüche 1 bis 3, wobei das Glitzerpigment ein mit Siliciumdioxid beschichtetes Aluminiumpigment ist.

5. Die Tintenzusammensetzung auf Wasserbasis für Schreibgeräte gemäß einem der Ansprüche 1 bis 4, ferner enthaltend einen Phosphatester mit einem HLB-Wert von 10 oder weniger.

6. Die Tintenzusammensetzung auf Wasserbasis für Schreibgeräte gemäß einem der Ansprüche 1 bis 5, ferner enthaltend einen Schaumhemmer.

7. Die Tintenzusammensetzung auf Wasserbasis für Schreibgeräte gemäß Anspruch 6, wobei der Schaumhemmer N-Acetylcystein ist.

## Revendications

1. Composition d'encre à base d'eau pour instruments d'écriture, contenant au moins un pigment scintillant, un polyoxyalkylène glycol et un épaississant, et ayant une viscosité, mesurée dans les conditions d'une température de 25°C et d'un taux de cisaillement de 3,83 s⁻¹, de 500 à 2000 mPa·s.

2. Composition d'encre à base d'eau pour instruments d'écriture selon la revendication 1, dans laquelle l'épaississant est au moins un choisi dans le groupe consistant en la gomme xanthane, le succinoglycane et la gomme diutane.

3. Composition d'encre à base d'eau pour instruments d'écriture selon la revendication 2, dans laquelle l'épaississant est un mélange de gomme xanthane et d'au moins un choisi dans le groupe consistant en le succinoglycane et la gomme diutane, et un rapport d'une masse de teneur en solide de gomme xanthane par rapport à une masse totale de teneur en solide de l'épaississant est 0,05 à 0,85.

4. Composition d'encre à base d'eau pour instruments d'écriture selon l'une quelconque des revendications 1 à 3, dans laquelle le pigment scintillant est un pigment d'aluminium revêtu de silice.

5. Composition d'encre à base d'eau pour instruments d'écriture selon l'une quelconque des revendications 1 à 4, contenant en outre un ester phosphate ayant une HLB de 10 ou moins.

6. Composition d'encre à base d'eau pour instruments d'écriture selon l'une quelconque des revendications 1 à 5, contenant en outre un agent anti-bulles.

7. Composition d'encre à base d'eau pour instruments d'écriture selon la revendication 6, dans laquelle l'agent anti-bulles est la N-acétylcystéine.
